# EUROPEAN PATENT SPECIFICATION

(11) **EP 3 925 069 B1**
(45) Date of publication and mention of the grant of the patent: **15.05.2024**
(21) Application number: 20705904.9
(22) Date of filing: 12.02.2020
(51) Int. Cl.: H02S 20/00, H02S 20/32

(54) **FLOATING SOLAR TRACKER**
SCHWIMMENDER SONNENFOLGER
SUIVEUR SOLAIRE FLOTTANT

(30) Priority: 12.02.2019 US 201962804250 P
(43) Date of publication of application: 22.12.2021
(73) Proprietor: Helioslite, 73370 Le Bourget du Lac (FR)
(72) Inventor: MENARD, Etienne, 73420 Voglans (FR)
(74) Representative: Benech, Frédéric
(86) International application number: PCT/EP2020/053634
(87) International publication number: WO 2020/165272

(56) References cited:
- CN-A- 105 227 103
- KR-A- 20150 051 352
- KR-B1- 101 764 542

## Description

This invention is in the general field of solar power generation.

More specifically, one particularly important, although nonexclusive, application of the invention is in the field of floating photovoltaic solar tracker systems capable of tracking the sun during the course of the day to maximize the energy output of photovoltaic modules.

### PRIOR ART DISCUSSION

Photovoltaic solar tracker systems provide means for rotating an array of photovoltaic solar modules around one or multiple axis in order to orientate these solar modules toward the sun.

In the specific case of floating photovoltaic solar systems which are designed to be installed on the surface of water bodies, there is to date a very limited number of tracker systems which have been installed. Most of the floating solar system which have been deployed rely on the use of simple floaters which are designed to support one or multiple solar modules at a fixed inclination angle.

There are few examples which have been reported in the literature of single axis floating solar tracking systems which provide a mean for rotating an array of floats around a vertical axis. The patent applications US4771764, US4786795, US20160087573A1, WO2014/005626A1, WO2016/185267A1, KR101028944B1, US20170040926A1 present different variants of vertical axis floating solar tracking systems.

For utility scale solar farm installations comprising thousands of solar modules, these types of vertical axis tracker systems typically comprise several tracker units rotating around separate vertical axis.

As several tracker units rotate multiple arrays of solar modules around different fixed points separated by a horizontal distance, this configuration induces challenging constraints for anchoring each block individually and extra lengths of underwater electrical cables are required for interconnecting multiple arrays of rotating solar modules blocks.

In addition, vertical axis floating tracker systems are more complex to install and their geometrical configuration does not permit simple access paths for performing maintenance operations on solar modules or on the mechanical components of the tracker units.

Furthermore, as the tracking trajectory of vertical axis tracker systems is far from being ideal, the extra energy production gain achieved by this class of tracking system is typically lower than 10%. Higher energy gain may be achieved by vertical single axis trackers if the solar modules are inclined at a steep inclination angle (i.e. >30°), but this configuration is highly undesirable as wind drag coefficients increase considerably and large separation distances between rows of modules are then required in order to avoid cross shading losses.

It is known from CN105227103A (JIANGSU BLUE SKY PHOTOVOLTAIC TECHNOLOGY CO LTD) a solar tracking assembly floating on a water surface with a water pump to change the orientation of the photovoltaic panels. But such a system has drawbacks.

In fact, the prior art fails to propose an easy to install product sufficiently cost effective to make utility scale floating tracking solar systems more competitive than floating solar installations installed on basic floats supporting solar modules at a fixed angle.

It is therefore an object of the present invention to further reduce manufacturing, shipping, installation and maintenance costs of floating photovoltaic solar installations, via an exemplary floating tracker design which addresses many of the limitations of prior-art designs.

To this end the present invention mainly proposes a floating photovoltaic solar tracker system which minimizes material usage, reduces shipping volume, simplifies field assembly, provide a geometrical configuration with simple access paths for performing maintenance operations on the solar modules, and capable of orienting the solar modules along a more optimal tracking trajectory in order to improve energy production and improve the competitiveness of floating solar plants.

According to theses aims one object of the invention is mainly to propose a floating solar tracker assembly, also called hereafter a solar tracker float assembly, according to claim 1. By maximum right directed position or maximum left directed position, it should be understood a direction into which the top periphery of said array of photovoltaic solar module is higher than the horizontal plane including said principal axis on the right or on the left of said directed position, also referred to as a maximum cardinal point directed position (i.e. for instance East/West or North/South) .

In other words the control system (including the activator of the movement) is arranged to rotate the array of the floating tracker assembly along its principal axis and adjust the angle of said array of photovoltaic solar modules between a low inclination angle position near or below the horizontal plane and a high angle position above the horizontal plane.

In some advantageous embodiments, it is also and/or further proposed a solar tracker float assembly including one or more of the following features:
- the principal axis is oriented along an East/West direction;
- the principal axis is oriented along a South/North direction;
- the angle of said photovoltaic solar modules with regard to said principal axis is < 20°;
- the angle of said voltaic solar modules with regards to said principal axis is equal to 0°;
- it comprises a plurality of tubes elements symmetrically and longitudinally disposed along said principal axis;
- it comprises two parallel plans of two parallel tube elements, said plans being rigidly connected together and said parallel tube elements being symmetrically disposed along the principal axis and in bias with regard to the tube elements of the other plan;
- it comprises one lower tube element and two upper parallel tube elements symmetrically disposed with regard to said principal axis;
- said lower tube element is rigidly connected to said upper parallel tube elements via two dissymmetric traverse parts, said traverse parts being supporting the array on their respective upper periphery with an inclined angle with regard to the horizontal plane;
- the tube elements are partially or completely hollow tubes having at least one internal cavity to be filled or emptied by water and/or air for rotation about said principal axis between said maximum positions;
- the floating tube element comprises multiple (for instance three) cavities radially (and/or regularly) disposed around said principal axis to be filled or emptied by water and/or air for rotation about said principal axis between said maximum positions;
- the arrays of photovoltaic solar modules comprise four photovoltaic solar modules in series;
- the tube elements are partially or completely hollow tubes having at least one internal cavity to be filled or emptied by water and/or air and comprising additional floating structure for rendering the floating tracker assembly unsubmersible;
- the additional floating structure comprises floating elements provided in an internal ring shaped core of said corresponding tube element;
- the additional floating structure comprises a plurality of hollow floating containers having a spherical shape or equivalent, for instance twenty to thirty containers for a tube element, for example with a length of 4 or 5 meters;
- each floating tube element is partially filled with one or a plurality of air filled containers or with other buoyant material;
- in position of floating on the water, the assembly is configured for having some of its cavities to be normally located under the water surface, wherein they are filled naturally with water by gravity;
- it comprises air pumps for pushing the water out of at least some of the cavities;
- the principal axis is oriented along an East/West direction, and said control system inject or withdraw water inside said internal cavities in order to rotate the floating tracker assembly along its principal axis and adjust the inclination angle of said array of photovoltaic solar modules between a minimum inclination angle position and a maximum inclination angle position, directed towards South or North;
- it further comprises a heating system for preheating the water to fill the cavities;
- the control system is arranged to compute the position of the sun during the course of the day and adjust the volume of water injected or withdrawn inside of each cavity of the tube elements, in order to orientate the solar modules toward the sun;
- each floating tube element comprises an external surface, a ring shape core and an internal surface, said ring shape core being in lightweight material such as polystyrene or polyurethane foam, and/or filled with air filled cylindrical cans or spheres or other buoyant material.

Advantageously another object of the invention is to provide a floating tracker system comprising a plurality of solar tracker float assembly as described hereabove.

Advantageously the system comprises the following elements:
a linear array of parallel columns of elongated float assemblies rotating along their principal axis which is oriented along a North-South direction parallel to the water surface,
each float assembly supports an array of photovoltaic solar modules oriented at a small (i.e. < 20°) inclined angle,
each float assembly comprises one or multiple tube elements having one or multiple internal cavities,
a control system comprising a set of pumps and an electronic controller which controls the volume of water and/or air injected inside the different internal cavities of the float tubes in order to adjust the rotation angle of each column of float assemblies along their respective principal axis.

In advantageous embodiments the system is according to any of the following features:
- the system comprises a plurality of solar tracker float assemblies as described above, wherein it comprises anchoring means to be anchored on the ground;
- each of said solar tracker float assemblies are longitudinally connected to an adjacent one;
- it further comprises a security system for filling or emptying automatically the tube elements in order to provide a rotation angle of 45 ° or more toward East or West in case of snow, and/or back to an horizontal position (0°) in case of high wind;
- it further comprises a security system for filling automatically the cavities of the tube elements in a symmetrical manner in order to partially sink into water the float assemblies and reduce their wind-drag coefficients in case of high wind;
- each floating tube is connected to a waterline in series with a least one other floating tube, in their lower parts;
- each floating tube is connected to an air line in series with the other floating tubes, for example in their upper parts.

### BRIEF DESCRIPTION OF THE DRAWINGS

The above and other features and advantages of the present invention will become apparent upon review of the following summarized and detailed descriptions taken into conjunction with the accompanying drawings in which:
Figures 1A & 1B show 3D view diagrams of a floating solar tracker float assembly according to one embodiment of the invention which is arranged for supporting an array of 4 solar modules.
Figures 2A and 2B shows maximum right directed position or maximum left directed position, on the right or on the left of said principal axis, also referred to as a maximum cardinal point directed position, i.e. East/West for Figure 2A and North/South for Figure 2B.
Figures 3A, 3B and 3C show 2D cross section view diagrams of elongated tubular shaped float elements, also designated hereafter by floating tube elements, of different embodiments of a solar tracker float assembly of the invention which are partially filled with water.
Figure 3D shows a 2D side view diagram of an endcap of an elongated tubular shaped float element of a solar tracker float assembly of the invention.
Figures 4A, 4B and 4C show 2D cross view diagrams of an array of another embodiment of solar tracker float assemblies of the invention which are rotated at different angles around their principal axis.
Figure 5 shows 3D view rows of solar tracker float assemblies, according to an embodiment of the invention which are rotated at different angles around their principal axis.
Figures 6A and 6B shows top and side view diagrams of an embodiment of a foundation solution for anchoring an array of solar tracker float assemblies according to the invention in a water body.
Figure 7 shows a schematic diagram of an example not covered by the claimed invention of a control system of the floating solar tracker system.
Figure 8 shows a lateral view of another embodiment of the invention, with two upper tube elements and one entirely immersed lower tube element.

### DETAILED DESCRIPTION OF THE INVENTION

The invention essentially provides a floating photovoltaic solar tracker system which minimizes material usage, reduces shipping volume, simplifies field assembly, provide a geometrical configuration with simple access paths for performing maintenance operations and capable of orienting the solar modules along a more optimal tracking trajectory in order to achieve higher energy production and improve the competitiveness of floating solar plants.

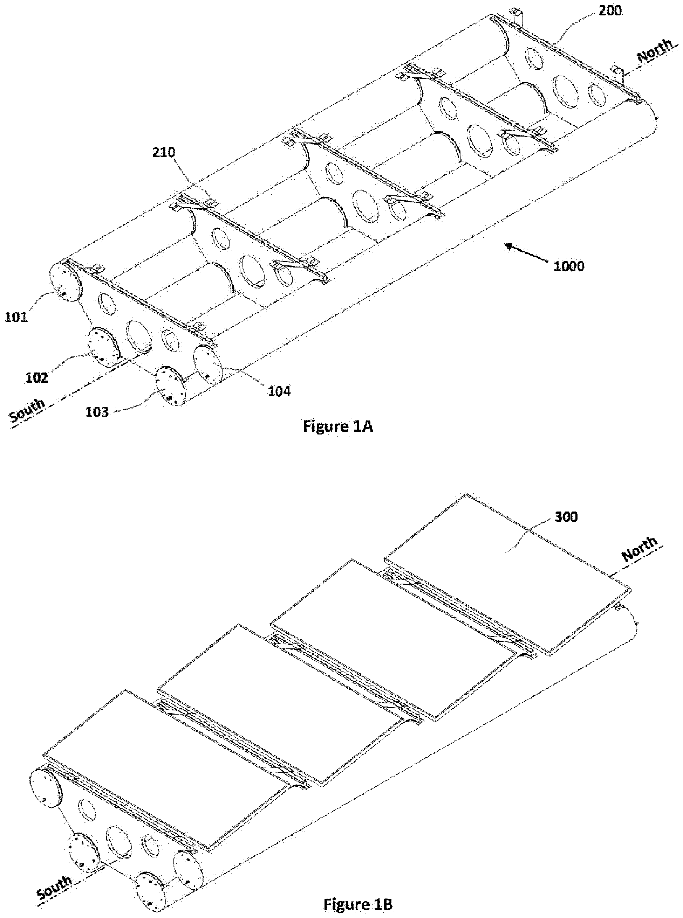

Figure 1A & 1B show 3D view diagrams of a floating solar tracker float assembly according to one embodiment of the invention which is arranged for supporting an array of 4 solar modules. This embodiment of solar tracker float assembly **1000** comprises 4 hollow tube elements **101-104** which are operably connected together with 5 frame assemblies **200.**

In this preferred embodiment of the invention, an array of 4 photovoltaic solar modules **300** are operably connected to the frame assemblies using module support brackets **210** which are designed to hold the solar modules **300** at an inclined angle toward South or North. In the Northern hemisphere, the solar modules are inclined toward South and toward North in the Southern hemisphere.

In a preferred embodiment of the invention, the inclination angle of the solar modules is lower than 20° in order to minimize wind drag coefficients. In alternative embodiments of the invention, each floating solar tracker float assembly may be equipped with a different number (N) of solar modules **300.** In these alternative embodiments, N+1 frame assemblies **200** are used for supporting N solar modules **300.** The tracker float assembly **1000** and hollow tube elements **101-104** have their principal axis oriented along a North-South direction.

In a preferred embodiment of the invention the hollow tube elements **101-104** have a cylindrically shape. In other embodiments of the invention the hollow tubes may have a different cross section shape such as a square, rectangle, hexagonal, or any closed shape polygon profile. The hollow tube elements **101-104** are operably connected to the frame assemblies **200** using structural glue or standard mechanical fasteners such as bolts, rivets, screws or straps. The module support brackets **210** are operably connected to each frame assembly **200** using structural glue or standard mechanical fasteners such as bolts, rivets or screws.

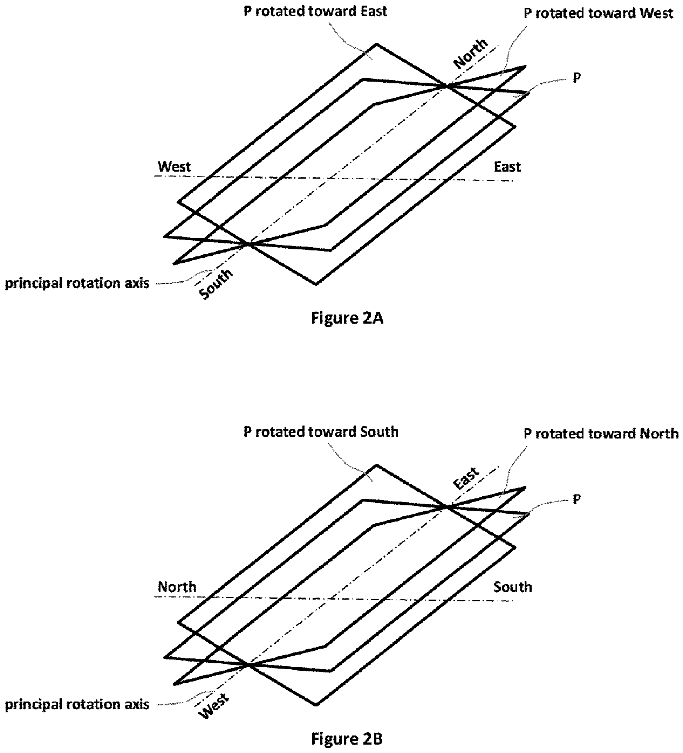

Figures 2A and 2B show in perspective the rotation of the floating tracker assembly along its principal axis, and more precisely the rotation of the general plan P formed by the two superior floating tube elements **101** and **104** (in the case of the embodiment of figure 1) toward East or toward West, in case of a principal axis orientated South/North (Figure 2A) or toward South or toward North, in case of a principal axis orientated West/East (Figure 2B).

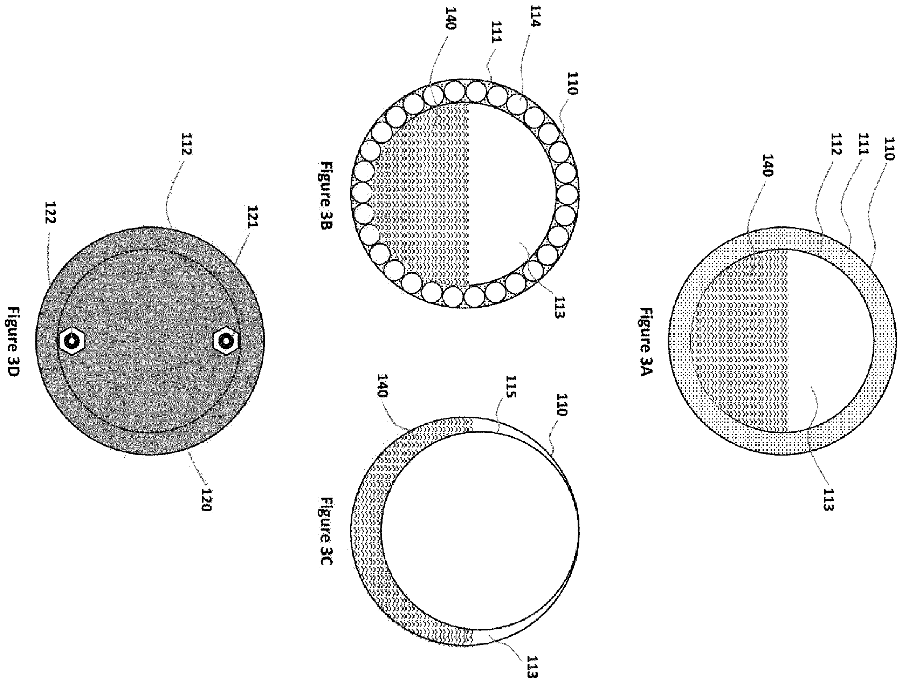

Figures 3A , 3B and 3C show cross section view diagrams of elongated cylindrically shaped tube float elements of an embodiment of a solar tracker float assembly of the invention comprising internal cavities which are partially filled with water **140.** The remaining volume of the internal cavity **113** not filled by water **140** is filled by air injected directly or ejected by filling with water the cavity of the tube element.

In one embodiment of the invention, each tube float element comprises an external **110** surface, a ring shaped core **111** and an internal surface **112.**

The ring shaped core **111** may be fabricated using a lightweight material such as expanded polystyrene or polyurethane foam.

In another embodiment of the invention, air filled cylindrical cans or spheres **114** may be used to partially or completely fill the ring shaped core **111.** The outer surface **110** of the ring shaped core **111** may be reinforced with a scratch resistant layer such as a rubber layer, hard plastic shell or a thin metal sheet. The inner surface **112** of the ring shaped core **111** may be protected with a water proof layer such as a rubber, a plastic film or a thin metal sheet.

Figure 3C is a cross section of another embodiment of a floating cylindrical tube element with an external surface **110** having an internal cavity **113** containing a plurality of containers **115,** for instance spherical cans, floating on internal water **140,** present in the interior of said tube element, each of said cans having a cross section for example of a dimension comprised between 1/2 and 9/10 of the cross section of the tube element.

More precisely the floating containers may have a spherical shape, an oblong shape or equivalent.

In a preferred embodiment of the invention, twenty to thirty floating containers **115** may be inserted inside a tube element with a length of 5 meters in order to insure that a minimum buoyancy will be preserved if some of the floating containers **115** get perforated. The remaining volume of the internal cavity **113** not filled with water **140** is filled by air injected directly or ejected by filling with water the cavity of the tube element.

Another embodiment uses (also and/or in substitution) air lines for interconnecting in series multiple floating tube elements from different float assemblies through their endcaps airline connector, for instance in the upper part of said endcaps.

Both ends of each float tube are closed by an endcap **120** which is illustrated on Figure 3D. Each endcap **120** may comprise a vent hole or an air-line connector **121** located on the upper side of the endcap.

If the tube element comprises a ring shape core, the airline **121** and water-line **122** connectors are respectively located immediately below and immediately above the perimeter of the internal surface **112** of the ring shape core of the float tube element. Short water lines are used for interconnecting in series multiple float tubes (or floating tube elements) from different float assemblies through their endcap water line connectors **122.**

An other embodiment uses (also and/or in substitution) air lines for interconnecting in series multiple floating tube elements from different float assemblies through their endcaps air-line connectors **121,** for instance in the upper part of said end caps.

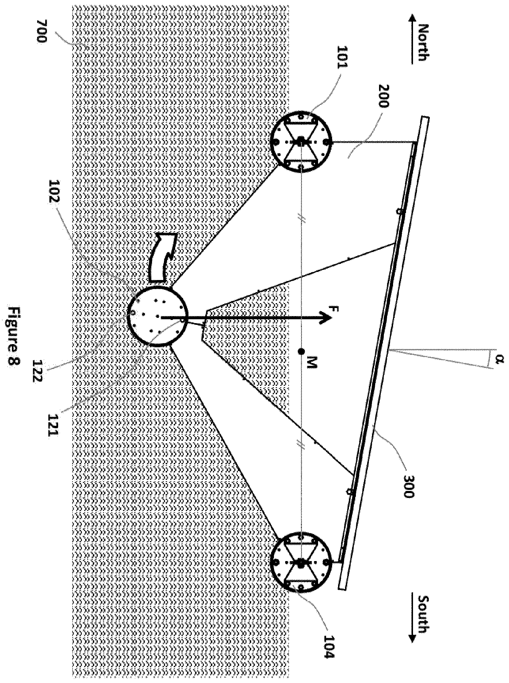

The preferred embodiment of a solar tracker float assembly **1000** of the invention illustrated in Figure 1A comprises 4 hollow tube elements **101-104.** In other embodiments of the invention the solar tracker float assembly may comprise a different number of tubes with a minimum of 2 hollow tube elements or 1 hollow tube element having a minimum of 2 internal cavities (see also Figure 8 hereafter).

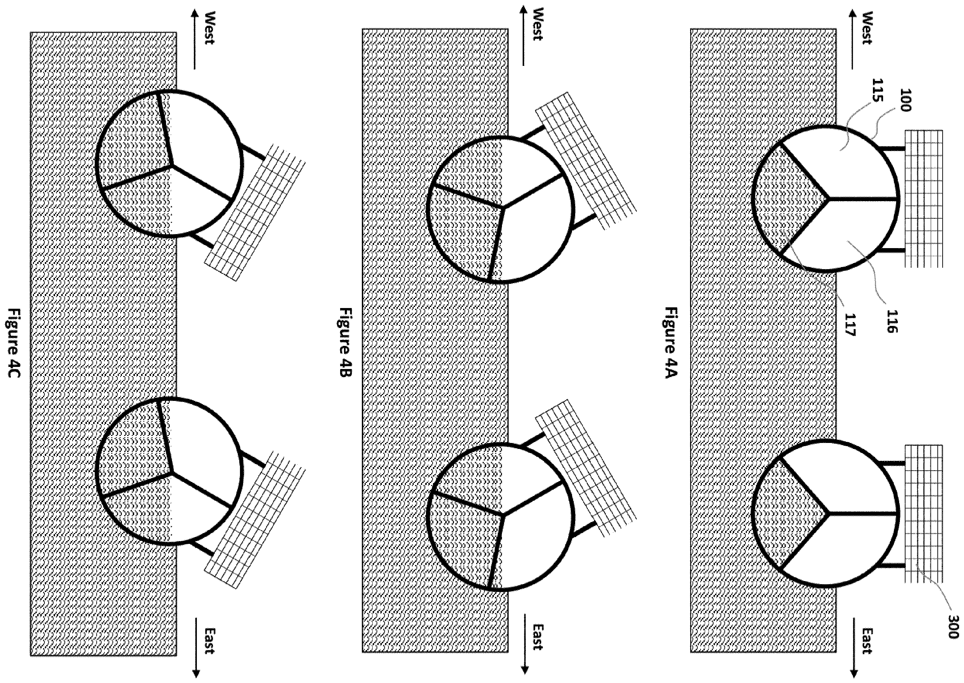

Figure 4 shows 2D side view diagrams of an array of another embodiment of solar tracker float assemblies of the invention which are rotated at different angles around their respective principal axis. In this alternative embodiment of the invention, each solar tracker float assembly comprises one hollow tube element **100** having 3 internal cavities **115, 116** & **117.**

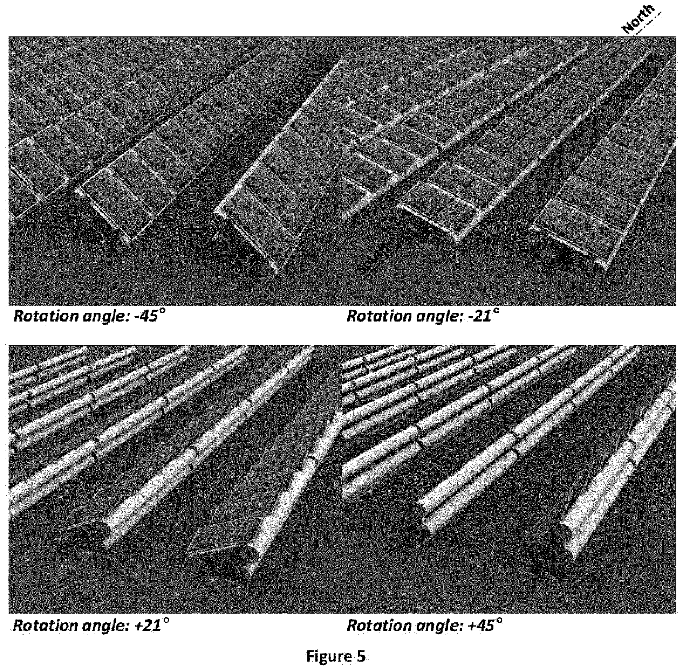

Figure 5 shows 3D view diagrams of an array of solar tracker float assemblies of one embodiment of the invention which are rotated at different angles around their principal axis (here a South/North axis).

The hollow tube elements which are located on the West side of each tracker float assembly are evacuated (filled with air) and the hollow tube elements located on the East side of each tracker float assembly are partially filled with water in order to orientate the solar modules toward the East direction.

In an opposite manner, the hollow tube elements which are located on the East side of each tracker float assembly are evacuated (filled with air) and the hollow tube elements located on the West side of each tracker float assembly are partially filled with water in order to orient the solar modules toward the West direction. The volume of water injected in each hollow tube element is adjusted continuously during the course of a day in order to orient the solar modules toward the sun.

In a preferred embodiment of the invention, the tracker float assemblies are designed to track the sun with an angular rotation range of -45° to +45°. In other embodiments of the invention the angular rotation range may be extended to a range of -60° to +60°, or in a less preferred embodiment of the invention reduced to a range of -30° to +30°.

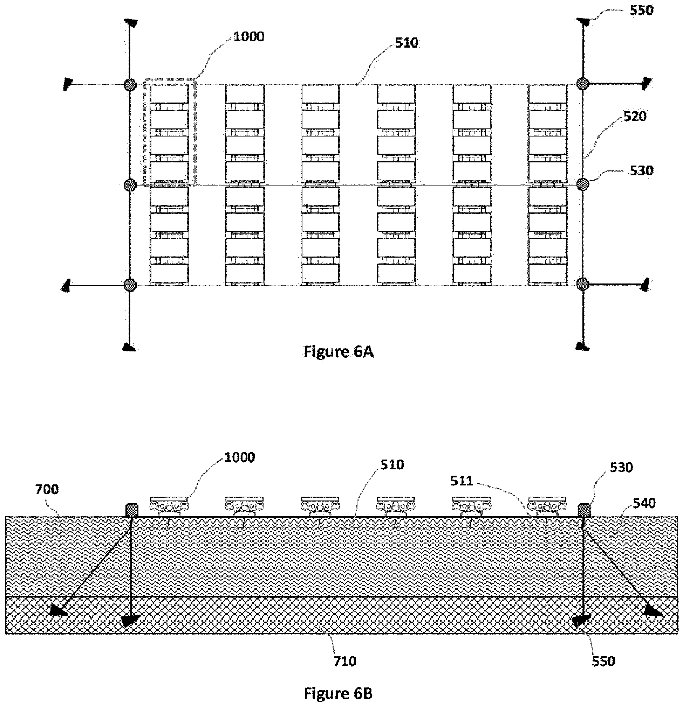

Figures 6A and 6B show top and side view diagrams of an embodiment of a foundation solution for anchoring an array of solar tracker float assemblies **1000** of the invention in a water body. In a preferred embodiment of the invention, the float assemblies **1000** are mechanically connected to a linear array of horizontal cables **510.**

In a preferred embodiment of the invention, the horizontal cables **510** are positioned at a depth of at least 0.5m under the water surface in order to provide clear service paths between the columns of float assemblies. In this configuration, short vertical cables or chains **511** are used for mechanically connecting the float assemblies **1000** to the horizontal cables **510.** With this configuration, maintenance operations such as replacement of defective solar modules can be easily performed using a small motorized service boat. In order to reduce the number of horizontal cables required for a large solar plant, one or multiple float assemblies may be mechanically connected together in a series manner along the North-South direction and only their upper and lower ends are then mechanically connected to the horizontal cables **510.** The East and West side of each horizontal cable **510** are mechanically connected to vertical cables **520.**

A pair of horizontal **510** and vertical cables **520** forms a block of tracker float assemblies which are secured with anchoring cables **540** attached to one of multiple fixed foundations **550** which are installed on the shore or at the bottom of the water body **700.** Ground anchors driven into the soil **710** or ballast blocks may be used as fixed foundations **550.** Buoys **530** may be added at the end of the horizontal cables **510** in order to compensate vertical forces induced by the anchoring cables **540** connecting the horizontal **510** and vertical **520** cables to the foundations **550.** The anchoring cables **540** may be equipped with tensioner devices in order to accommodate water height variations.

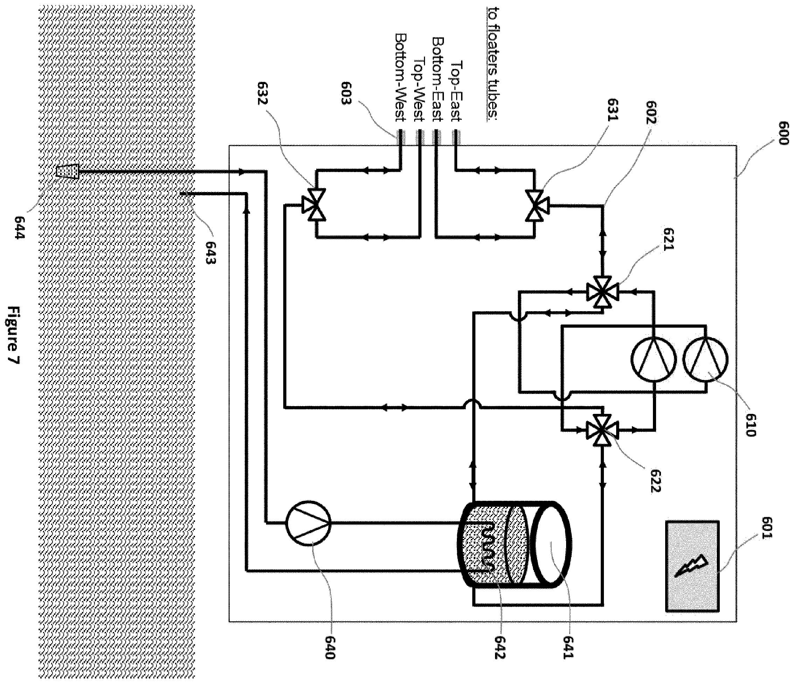

Figure 7 shows a schematic diagram of an example not covered by the claimed invention of a control system **600** of the floating solar tracker system. The control system comprises a set of primary pumps **610** and valves **621** & **622, 631** & **632** which are connected through water lines **602** to the different tubes of the float assemblies **1000.**

The control system **600** may be installed on shore to facilitate maintenance operations. The water lines **603** connected to the tubes of the float assemblies should be thermally insulated and preferably routed inside a trench on the ground and then under the water surface in order to protect them from freezing. In order to improve the system's overall reliability, multiple primary water pumps **610** may be connected in parallel in order to provide some redundancy.

The water flow direction may be inverted using a pair of 4-ways valves **621** & **622** or in an alternative embodiment using 2 water pumps connected in opposite directions. In this last configuration, one-way valves should be added in series with each water pump to prevent backflow through the other pump connected in opposite direction.

According to the invention the filling with water or emptying of the water is obtained by injection or withdrawing air via an adequate circuit, for instance a set of air pumps, the water being introduced by gravity or pushed out by air pressure.

For installations on sites which are exposed to long periods of ice, the control system may be equipped with an optional heating system which may be used to pre-heat the water injected inside the tubes of the float assemblies. Water located at a depth of few meters under the surface of large bodies of water never freeze and thus the calories contained in deep water may be recovered to pre-heat the water injected inside the tubes of the float assemblies. In a preferred embodiment of the invention, the system comprises a primary water injection loop which is hydraulically isolated from a secondary pre-heating loop.

In this configuration, one or multiple secondary water pumps **640** are configured to pump deep water from the water body. The calories of the deep water are transferred to the primary injection loop through a heat exchanger **642.** For very cold sites subject to long periods of ice, the heat exchanger **642** may be replaced by a water-to-water heat pump system in order to further increase the temperature of the water injected inside the tubes of the float assemblies.

The deep water supply port may be equipped with a coarse filter **644** and finer filters may be installed on the input side of the water pumps. In another embodiment of the invention, the primary injection loop may be configured as a close loop system with the primary pump(s) connected directly to the deep water supply port. In yet another embodiment of the invention, a water reservoir **642** may be used to partially isolate the primary injection loop from the secondary preheating loop.

In this last configuration, no heat exchanger is required as the water reservoir act a mixing bottle and sediment tank. In all embodiments of the invention, the control system comprises an electronic control system **601** which controls the water pumps and valves in an automated manner.

The electronic control system **601** computes the position of the sun during the course of the day and adjust the volume of water injected inside each tube of the float assemblies in order to orientate the solar modules toward the sun. In a preferred embodiment of the invention, the control system **601** uses an open loop algorithm to adjust the volume of water injected inside the tubes of the float assemblies according to the system kinetic transfer function.

Flow sensors may be installed on the water lines to measure the volume of water injected or evacuated from each tube. In another embodiment of the invention, a tilt sensor may be mounted onto a float assembly in order to measure the rotation angle and operate the electronic control system **601** in a close loop control configuration.

In yet another embodiment of the invention, the internal cavities of the tubes of the float assemblies may be configured to be normally located under the water surface and thus filled naturally with water by gravity forces.

Figure 8 shows an example of such embodiment of the invention. In this example, the two upper tube elements **101** & **104** are floating above the water body **700** and the lower tube element **102** is entirely immersed in water.

For this embodiment of the invention, the control system is equipped with air pumps instead of water pumps in order to fill the tubes of the float assemblies with air and push out water.

In the example illustrated in Figure 8, the float assembly rotates toward the South direction as the buoyancy of the lower tube element **102** increases when it is partially or fully filled with air. In such embodiment of the invention, short open-ended tubes may be connected to the water-line connectors **122** which are located at the bottom of the tube endcaps of the float tubes. These open-ended tubes enable water to go in and out of the float tubes when the control system adjusts the pressure of the air inside the tube internal cavity.

In a preferred embodiment of the invention, the control system is connected to temperature sensors to monitor external air temperature and the surface temperature of water. When these measured temperatures fall under pre-defined thresholds, the control system activates a special ice mitigation operating mode in order to prevent ice formation in the water lines and in the internal cavities of the tubes of the float assemblies.

In the specific case of the exemplary float design illustrated in Figure 1A, the following ice mitigation operating mode may be used: step 1) empty the top 2 tubes, step 2) activate the pre-heating system, step 3) pump continuously pre-heated water into the bottom 2 tubes of the float assemblies. This ice mitigation operating mode can be easily adapted depending on the number of tubes used in each float assembly using a similar approach.

In yet another embodiment of the invention, the control system may also activate a different operating mode in order to mechanically evacuate snow from the surface of the solar modules. The control system may be equipped with a snow sensor or it can receive a command from an operator or an external server to activate this special snow management mode.

When this special snow management mode is active, the control system can quickly rotate the float assemblies to their extreme (Left or Right) angular rotation limit. Thick layers of snow typically naturally fall under gravity force when solar modules are inclined at an angle exceeding ~30°. This special snow management mode uniquely enable safe installation of the floating solar system of the invention on water bodies which are exposed to snow falls.

In a preferred embodiment of the invention, the control system is connected to a wind sensor instrument and when the measured wind speed exceeds a defined threshold the float assemblies are moved into a 0 degree rotation angle position (horizontal along the East-West direction).

In order to further improve the system resistance to extreme winds, some or all of the tubes of the float assemblies may be partially or fully filled with water in a symmetrical manner. In this specific configuration, the float assemblies are maintained into a 0 degree rotation angle position and partially sunk into water which induces a reduction of their wind-drag coefficients and limit the forces transferred by the system anchoring lines to the foundations.

In yet another embodiment of the invention, the control system may be equipped with another special operating mode to fill completely all the tubes of the float assemblies and then stop the pumps. This special operating mode may be used for installations on sites such as water retention reservoir. When the water retention reservoir is empty, this special operating mode may be activated to ballast on the ground the float assemblies and continue to operate the plant in a fixed position.

Figure 8 shows a lateral view of a floating tracker float assembly according to another embodiment of the invention arranged to support an array of photovoltaic solar modules **300.** It comprises three hollow tube elements, i.e. two upper tube elements **101** and **104** (forming the general plan P), and one lower tube element **102.** The tube elements **101, 102** and **104** are connected together by N+1 frames assemblies **200** having a dissymmetric (with regard to the principal axis) form in order to hold the solar modules with an inclined angle **α,** for instance with a substantially "V" angle shape, the upper tubes being fixed to said branches for example, for one (**101**) at an intermediate external part of a first branch of the "V" and for the other (**104**) at the extremity part of the second branch of the "V". Due to the dissymmetry with regard to the central point **M,** and when the lower tube is filled with air for instance, the pressure of the force **F** generates the rotation (arrow on the figure) and therefore the variation of the inclination of the photovoltaic panel **300.**

The invention has been described with reference to various specific and preferred embodiments and techniques. However, it should be understood that variations and modifications may be made while remaining within the scope of the invention. This invention is not to be limited by the embodiments disclosed, including any shown in the drawings or exemplified in the specification, which are given by way of example or illustration and not of limitation. The scope of the invention shall only be limited by the claims.

## Claims

1. A solar tracker float assembly (1000) having a support extending along a principal longitudinal rotational axis and comprising at least one elongated floating tube element (101-104) extending along and/or parallel to said principal longitudinal rotational axis, said floating tube element having at least one internal cavity,
at least one array of photovoltaic solar modules (300) oriented at an angle with regard to said principal longitudinal rotational axis and rigidly connected to said support of the tracker float assembly,
wherein the solar tracker assembly comprises a plurality of floating tubes elements (101-104) symmetrically and longitudinally disposed along said principal longitudinal rotational axis or wherein said floating tube element comprises multiple cavities (113) radially and/or regularly disposed around said principal longitudinal rotational axis to be filled or emptied by air to introduce or push out water for rotation about said principal longitudinal rotational axis and
a control system (600) comprising air pumping means and an electronic controller arranged to control said air pumping means,
the filling and emptying of the water being obtained by injection or withdrawal of air via said air pumping means the water being introduced by gravity or pushed out by air pressure in order to rotate the solar floating tracker assembly about said principal longitudinal rotational axis between a maximum right directed position and a maximum left directed position.

2. The solar tracker float assembly of claim 1, wherein the photovoltaic solar modules (300) are orientated at a small inclined angle < 20°with regard to said principal longitudinal rotational axis.

3. The floating solar tracker float assembly of claim 1, wherein the photovoltaic solar modules (300) are orientated at an angle equal to 0° with regard to said principal longitudinal rotational axis.

4. The assembly according to any of the preceding claims, wherein it comprises two parallel plans of two parallel tube elements (101-104), said plans being rigidly connected together and said parallel tube elements being symmetrically disposed along the principal longitudinal rotational axis and in bias with regard to the tube elements of the other plan.

5. The assembly according to any of the preceding claims, wherein some of the tube elements (101-104) are partially or completely hollow tubes having at least one internal cavity (113, 115, 116, 117) to be filled or emptied by air to introduce or push out water for rotation about said principal longitudinal rotational axis between said maximum right directed position and said maximum left directed position.

6. The assembly according to any of the preceding claims, wherein, in position of floating on the water, the assembly is configured for having some of its cavities (113) to be normally located under the water surface, wherein they are arranged to be filled naturally with water by gravity in the absence of sufficient air counter pressure in said cavities due to air withdrawal via said air pumping means.

7. The assembly according to any of the preceding claims 1 to 6, wherein it further comprises water pumps (610) to inject and/or withdraw water inside at least some of said internal cavities.

8. The assembly being equipped with a number (N) of solar modules (300), according to any of the preceding claims, wherein it comprises two upper tube elements (101, 104) symmetrically disposed with regard to said principal longitudinal rotational axis and a lower tube element (102), said tube elements being rigidly connected to each other via N+1 frame assemblies (200) having a dissymmetric form with regard to said principal longitudinal rotational axis in order to hold the solar modules with an angle, and to generate the rotation of said photovoltaic panels when the lower tube is filled or unfilled with air.

9. The assembly according to any of the preceding claims, wherein it further comprises a heating system (642) for preheating the water to fill the cavities.

10. The assembly according to any of the preceding claims, wherein the control system (600) is arranged to compute the position of the sun during the course of the day and adjust the volume of air injected or withdrawn inside of each cavity of the tube elements, in order to orientate the solar modules toward the sun.

11. The assembly according to any of the preceding claims, wherein each floating tube element comprises an external surface (110), a ring shape core (111) and an internal surface (112), said ring shape core being in lightweight material such as polystyrene or polyurethane foam, and/or filled with air filled cylindrical cans or spheres (114) or other buoyant material.

12. The assembly according to any of the preceding claims, wherein each floating tube element is partially filled with one or multiple air-filled containers (115) or other buoyant material.

13. A floating solar tracker system comprising a plurality of solar tracker float assemblies according to any of the preceding claims, wherein it comprises anchoring means (540,550) to be anchored on the ground.

14. The system according to claim 13, wherein each of said solar tracker float assemblies are longitudinally connected to an adjacent one.

15. The system of any of the preceding claims 13 and 14, wherein it further comprises a security system for filling or emptying automatically the tube elements in order to provide a rotation angle of 45 ° or more toward Right or Left in case of snow, and/or back to an horizontal position (0°) in case of high wind.

16. The system of any of the preceding claims 13 to 15, wherein it further comprises a security system for authorizing the automatic filling by water of the internal cavities of the tube elements in a symmetrical manner in order to partially sink into water the float assemblies and reduce their wind-drag coefficients in case of high wind.

17. The floating solar tracker system according to any of claims 13 to 16, wherein each floating tube (101 - 104) is connected to a water-line (122) in series with at least one other of said floating tubes in their lower part.

18. The floating solar tracker system according to any of claims 13 to 17, wherein each floating tube is connected to an air-line (121) in series with the other floating tubes in their upper part.

## Patentansprüche

1. Sonnenfolger-Schwimmanordnung (1000) mit einem Träger, der sich entlang einer längs verlaufenden Hauptrotationsachse erstreckt und zumindest ein längliches schwimmendes Rohrelement (101-104) umfasst, das sich entlang und/oder parallel zu der längs verlaufenden Hauptrotationsachse erstreckt, wobei das schwimmende Rohrelement zumindest einen internen Hohlraum aufweist,
zumindest eine Anordnung von Photovoltaik-Solarmodulen (300), die in einem Winkel bezüglich der längs verlaufenden Hauptrotationsachse angeordnet und mit dem Träger der Folger-Schwimmanordnung starr verbunden sind, wobei die Sonnenfolgeranordnung mehrere schwimmende Rohrelemente (101-104) umfasst, die symmetrisch und längs entlang der längs verlaufenden Hauptrotationsachse angeordnet sind oder wobei das schwimmende Rohrelement mehrere Hohlräume (113) umfasst, die radial und/oder regelmäßig um die längs verlaufende Hauptrotationsachse angeordnet sind, um für eine Drehung um die längs verlaufende Hauptrotationsachse durch Luft zum Einführen oder Herausdrücken von Wasser gefüllt oder entleert zu werden, und
ein Steuersystem (600), umfassend Luftpumpmittel und eine elektronische Steuerung, angeordnet zum Steuern der Luftpumpmittel,
wobei das Füllen und Entleeren des Wassers erhalten wird durch Injektion oder Abzug von Luft über das Luftpumpmittel, wobei das Wasser durch Schwerkraft eingeführt oder durch Luftdruck herausgedrückt wird, um die Sonnenfolgeranordnung zwischen einer maximal nach rechts gerichteten Position und einer maximal nach links gerichteten Position um die längs verlaufende Hauptrotationsachse zu drehen.

2. Sonnenfolger-Schwimmanordnung nach Anspruch 1, wobei die Photovoltaik-Solarmodule (300) mit einem kleinen Neigungswinkel von < 20° bezüglich der längs verlaufenden Hauptrotationsachse ausgerichtet sind.

3. Sonnenfolger-Schwimmanordnung nach Anspruch 1, wobei die Photovoltaik-Solarmodule (300) mit einem Winkel gleich 0° bezüglich der längs verlaufenden Hauptrotationsachse ausgerichtet sind.

4. Anordnung nach einem der vorhergehenden Ansprüche, die zwei parallele Ebenen von zwei parallelen Rohrelementen (101-104) umfasst, wobei die Ebenen starr miteinander verbunden sind und wobei die parallelen Rohrelemente symmetrisch entlang der längs verlaufenden Hauptrotationsachse angeordnet und bezüglich der Rohrelemente der anderen Ebene vorgespannt sind.

5. Anordnung nach einem der vorhergehenden Ansprüche, wobei einige der Rohrelemente (101-104) teilweise oder vollständig hohle Rohre sind, die zumindest einen internen Hohlraum (113, 115, 116, 117) aufweisen, der durch Luft gefüllt oder entleert wird, um zur Drehung um die längs verlaufende Hauptrotationsachse von der maximal nach rechts gerichteten Position zur maximal nach links gerichteten Position Wasser einzuführen oder herauszudrücken.

6. Anordnung nach einem der vorhergehenden Ansprüche, wobei, in einer Schwimmposition auf dem Wasser, die Anordnung dazu ausgelegt ist, einige Hohlräume (113) aufzuweisen, die sich normal unter der Wasseroberfläche befinden, wobei sie angeordnet sind, um bei Abwesenheit von ausreichendem Luftgegendruck in den Hohlräumen aufgrund von Luftabzug über die Luftpumpmittel durch Schwerkraft natürlich gefüllt zu werden.

7. Anordnung nach einem der vorhergehenden Ansprüche 1 bis 6, die ferner Wasserpumpen (610) umfasst, um Wasser in das Innere zumindest einiger der internen Hohlräume zu injizieren oder daraus abzuziehen.

8. Anordnung, ausgestattet mit einer Anzahl (N) von Solarmodulen (300), nach einem der vorhergehenden Ansprüche, die zwei obere Rohrelemente (101, 104), die symmetrisch bezüglich der längs verlaufenden Hauptrotationsachse angeordnet sind, und ein unteres Rohrelement (102) umfasst, wobei die Rohrelemente über N+1 Rahmenanordnungen (200), die eine disymmetrische Form bezüglich der längs verlaufenden Hauptrotationsachse aufweisen, starr miteinander verbunden sind, um die Solarmodule mit einem Winkel zu halten und um die Drehung der Photovoltaikpaneele zu erzeugen, wenn das untere Rohr mit Luft gefüllt oder entleert wird.

9. Anordnung nach einem der vorhergehenden Ansprüche, die ferner ein Heizsystem (642) zum Vorerwärmen des Wassers zum Füllen der Hohlräume umfasst.

10. Anordnung nach einem der vorhergehenden Ansprüche, wobei das Steuersystem (600) angeordnet ist, um die Position der Sonne im Tagesverlauf zu berechnen und das Volumen von Luft anzupassen, die in jeden Hohlraum der Rohrelemente injiziert oder daraus abgezogen wird, um die Solarmodule zur Sonne hin auszurichten.

11. Anordnung nach einem der vorhergehenden Ansprüche, wobei jedes schwimmende Rohrelement eine externe Oberfläche (110), einen ringförmigen Kern (111) und eine interne Oberfläche (112) umfasst, wobei der ringförmige Kern in einem leichtgewichtigen Material vorliegt, wie etwa Polystyrol oder Polyurethanschaum, und/oder mit luftgefüllten zylindrischen Dosen oder Sphären (114) oder einem anderen schwimmenden Material gefüllt ist.

12. Anordnung nach einem der vorhergehenden Ansprüche, wobei jedes schwimmende Rohrelement teilweise mit einem oder mehreren luftgefüllten Behältern (115) oder einem anderen schwimmenden Material gefüllt ist.

13. Schwimmendes Sonnenfolgersystem, umfassend mehrere Sonnenfolger-Schwimmanordnungen nach einem der vorhergehenden Ansprüche, das Verankerungsmittel (540, 550) umfasst, um im Boden verankert zu werden.

14. System nach Anspruch 13, wobei jede der Sonnenfolger-Schwimmanordnungen in Längsrichtung mit einer angrenzenden verbunden ist.

15. System nach einem der vorhergehenden Ansprüche 13 und 14, das ferner ein Sicherheitssystem zum automatischen Füllen oder Entleeren der Rohrelemente umfasst, um bei Schnee einen Drehwinkel von 45° oder mehr nach rechts oder links und/oder bei starkem Wind eine Drehung zurück in eine horizontale Position (0°) bereitzustellen.

16. System nach einem der vorhergehenden Ansprüche 13 bis 15, das ferner ein Sicherheitssystem zum Autorisieren des automatischen Füllens der internen Hohlräume der Rohrelemente mit Wasser in einer symmetrischen Weise umfasst, um bei starkem Wind die Schwimmanordnungen teilweise in Wasser einzutauchen und ihren Windwiderstandsbeiwert zu verringern.

17. Schwimmendes Sonnenfolgersystem nach einem der Ansprüche 13 bis 16, wobei jedes schwimmende Rohr (101-104) mit einer Wasserleitung (122) verbunden ist, die in Reihe mit zumindest einem anderen der schwimmenden Rohre in ihrem unteren Teil ist.

18. Schwimmendes Sonnenfolgersystem nach einem der Ansprüche 13 bis 17, wobei jedes schwimmende Rohr mit einer Luftleitung (121) verbunden ist, die in Reihe mit den anderen schwimmenden Rohren in ihrem oberen Teil ist.

## Revendications

1. Ensemble flottant de suiveur solaire (1000) comportant un support s'étendant le long d'un axe de rotation longitudinal principal et comprenant au moins un élément tubulaire flottant (101-104) allongé s'étendant le long dudit axe de rotation longitudinal principal et/ou parallèle à celui-ci, ledit élément tubulaire flottant comportant au moins une cavité interne,
au moins un réseau de modules solaires photovoltaïques (300) orientés selon un certain angle par rapport audit axe de rotation longitudinal principal et solidarisés audit support de l'ensemble flottant de suiveur,
l'ensemble suiveur solaire comprenant une pluralité d'éléments tubulaires flottants (101-104) disposés symétriquement et longitudinalement le long dudit axe de rotation longitudinal principal ou bien ledit élément tubulaire flottant comprenant de multiples cavités (113) disposées radialement et/ou régulièrement autour dudit axe de rotation longitudinal principal pour être remplies d'air ou vidées de celui-ci, afin d'introduire ou d'expulser de l'eau en vue d'une rotation autour dudit axe de rotation longitudinal principal, et
un système de commande (600) comprenant des moyens de pompage d'air et un dispositif de commande électronique conçu pour commander lesdits moyens de pompage d'air,
le remplissage et le vidage de l'eau étant obtenus par injection ou prélèvement d'air par l'intermédiaire desdits moyens de pompage d'air, l'eau étant introduite par gravité ou expulsée par une pression d'air afin de faire tourner l'ensemble de suiveur solaire flottant autour dudit axe de rotation longitudinal principal entre une position maximale orientée vers la droite et une position maximale orientée vers la gauche.

2. Ensemble flottant de suiveur solaire selon la revendication 1, dans lequel les modules solaires photovoltaïques (300) sont orientés selon un petit angle incliné < 20° par rapport audit axe de rotation longitudinal principal.

3. Ensemble flottant de suiveur solaire selon la revendication 1, dans lequel les modules solaires photovoltaïques (300) sont orientés selon un angle égal à 0° par rapport audit axe de rotation longitudinal principal.

4. Ensemble selon l'une quelconque des revendications précédentes, comprenant deux plans parallèles de deux éléments tubulaires (101-104) parallèles, lesdits plans étant solidarisés entre eux et lesdits éléments tubulaires parallèles étant disposés symétriquement le long de l'axe de rotation longitudinal principal et en biais par rapport aux éléments tubulaires de l'autre plan.

5. Ensemble selon l'une quelconque des revendications précédentes, dans lequel certains des éléments tubulaires (101-104) sont des tubes partiellement ou totalement creux ayant au moins une cavité interne (113, 115, 116, 117) qui doit être remplie d'air ou vidée de celui-ci afin d'introduire ou d'expulser de l'eau en vue d'une rotation autour dudit axe de rotation longitudinal principal, entre ladite position maximale orientée vers la droite et ladite position maximale orientée vers la gauche.

6. Ensemble selon l'une quelconque des revendications précédentes, l'ensemble étant configuré, en position de flottaison sur l'eau, pour que certaines de ses cavités (113) soient normalement situées sous la surface de l'eau, lesdites cavités étant conçues pour se remplir naturellement d'eau par gravité en l'absence d'une contre-pression d'air suffisante dans lesdites cavités due à un prélèvement d'air par l'intermédiaire desdits moyens de pompage d'air.

7. Ensemble selon l'une quelconque des revendications précédentes 1 à 6, comprenant en outre des pompes à eau (610) pour injecter et/ou prélever de l'eau à l'intérieur d'au moins certaines desdites cavités internes.

8. Ensemble équipé d'un nombre (N) de modules solaires (300) selon l'une quelconque des revendications précédentes, comprenant deux éléments tubulaires supérieurs (101, 104) disposés symétriquement par rapport audit axe de rotation longitudinal principal et un élément tubulaire inférieur (102), lesdits éléments tubulaires étant solidarisés entre eux par l'intermédiaire de N+1 assemblages de châssis (200) présentant une forme dissymétrique par rapport audit axe de rotation longitudinal principal afin de maintenir les modules solaires selon un certain angle et de générer la rotation desdits panneaux photovoltaïques lorsque le tube inférieur est rempli d'air ou vidé de celui-ci.

9. Ensemble selon l'une quelconque des revendications précédentes, comprenant en outre un système de chauffage (642) pour préchauffer l'eau servant à remplir les cavités.

10. Ensemble selon l'une quelconque des revendications précédentes, dans lequel le système de commande (600) est conçu pour calculer la position du soleil au cours de la journée et pour régler le volume d'air injecté ou prélevé à l'intérieur de chaque cavité des éléments tubulaires, afin d'orienter les modules solaires vers le soleil.

11. Ensemble selon l'une quelconque des revendications précédentes, dans lequel chaque élément tubulaire flottant comprend une surface externe (110), un noyau en forme d'anneau (111) et une surface interne (112), ledit noyau en forme d'anneau étant en matériau léger tel que le polystyrène ou la mousse de polyuréthane et/ou rempli de boîtes cylindriques ou de sphères (114) remplies d'air ou d'un autre matériau flottant.

12. Ensemble selon l'une quelconque des revendications précédentes, dans lequel chaque élément tubulaire flottant est partiellement rempli d'un ou plusieurs conteneurs remplis d'air (115) ou d'un autre matériau flottant.

13. Système flottant de suiveur solaire comprenant une pluralité d'ensembles flottants de suiveurs solaires selon l'une quelconque des revendications précédentes, comprenant des moyens d'ancrage (540, 550) destinés à être ancrés au sol.

14. Système selon la revendication 13, dans lequel chacun desdits ensembles flottants de suiveurs solaires est relié longitudinalement à un ensemble adjacent.

15. Système selon l'une quelconque des revendications 13 et 14, comprenant en outre un système de sécurité pour remplir ou vider automatiquement les éléments tubulaires afin d'assurer un angle de rotation de 45° ou plus vers la droite ou la gauche en cas de neige et/ou un retour à une position horizontale (0°) en cas de vent fort.

16. Système selon l'une quelconque des revendications précédentes 13 à 15, comprenant en outre un système de sécurité pour autoriser le remplissage automatique par l'eau des cavités internes des éléments tubulaires de manière symétrique, afin d'enfoncer partiellement dans l'eau les ensembles flottants et de réduire leurs coefficients de traînée au vent en cas de vent fort.

17. Système flottant de suiveur solaire selon l'une quelconque des revendications 13 à 16, dans lequel chaque tube flottant (101-104) est relié à une conduite d'eau (122) en série avec au moins un autre desdits tubes flottants au niveau de leur partie inférieure.

18. Système flottant de suiveur solaire selon l'une quelconque des revendications 13 à 17, dans lequel chaque tube flottant est relié à une conduite d'air (121) en série avec les autres tubes flottants au niveau de leur partie supérieure.
